# EUROPÄISCHE PATENTSCHRIFT

(11) **EP 2 547 556 B1**
(45) Veröffentlichungstag und Bekanntmachung des Hinweises auf die Patenterteilung: **10.05.2017**
(21) Anmeldenummer: 11705605.1
(22) Anmeldetag: 01.03.2011
(51) Int. Cl.: B60R 16/023, B60R 16/03

(54) **VERFAHREN ZUR ERKENNUNG EINES KURZSCHLUSSES NACH BATTERIE-PLUS UND SCHALTUNGSEINRICHTUNG ZUR DURCHFÜHRUNG DES VERFAHRENS**
METHOD FOR IDENTIFYING A SHORT CIRCUIT TO THE POSITIVE TERMINAL OF A BATTERY AND CIRCUIT DEVICE FOR CARRYING OUT THE METHOD
PROCÉDÉ DE DÉTECTION D'UN COURT-CIRCUIT VERS LE PÔLE POSITIF DE LA BATTERIE ET DISPOSITIF DE CIRCUIT POUR METTRE EN UVRE LE PROCÉDÉ

(30) Priorität: 16.03.2010 DE 102010002899
(43) Veröffentlichungstag der Anmeldung: 23.01.2013
(73) Patentinhaber: Robert Bosch GmbH, 70442 Stuttgart (DE)
(72) Erfinder: BAUER, Patrick, 70619 Stuttgart (DE); OENCEL, Mehmet, 74357 Boennigheim (DE); CZASCH, Martin, 71364 Winnenden (DE); BAUER, Ralph, 73730 Esslingen (DE); SCHELLING, Bernd, 70469 Stuttgart (DE); HOLST, Thomas, 70499 Stuttgart (DE); HOEGELE, Georg, 70825 Muenchingen (DE)
(86) Internationale Anmeldenummer: PCT/EP2011/053008
(87) Internationale Veröffentlichungsnummer: WO 2011/113689

(56) Entgegenhaltungen:
- DE-A1- 10 235 162
- DE-A1-102008 040 810

## Beschreibung

Die Erfindung betrifft ein Verfahren zur Erkennung eines Kurzschlusses nach Batterie-Plus im Stromkreis eines Kraftfahrzeugs mit einem von einer Steuereinrichtung ansteuerbaren elektronischen Leistungsschalter und mit wenigstens einem, vorzugsweise einer Mehrzahl von Verbrauchern ein- und ausschaltenden elektrischen Schaltern, deren Schaltzustand der Steuereinrichtung gemeldet wird und bei denen auf eine fehlerfreie Funktion dann geschlossen wird, wenn bei eingeschaltetem elektronischen Leistungsschalter die angeschlossenen Verbraucher mit Spannung versorgt werden und bei ausgeschaltetem elektronischen Leistungsschalter eine Meldung der die Verbraucher ein - und ausschaltenden Schalter "Kurzschluss" oder "Lastabfall" erfolgt.

Gegenstand der vorliegenden Erfindung sind auch eine Schaltungsanordnung mit einem Elektronikbaustein, der so ausgelegt ist, dass er zur Durchführung des Verfahrens geeignet ist, sowie ein Computerprogramm und ein Computerprogrammprodukt, welche ebenfalls zur Durchführung des Verfahrens geeignet sind.

### Stand der Technik

In heutigen Fahrzeugen sind im Steuergerät elektronische Leistungsschalter in Motorsteuergeräten vorgesehen, die die Batteriespannung eines oder mehrerer Verbraucher ein- und ausschalten. Diese Schalter werden elektronisch realisiert. Sie üben im Wesentlichen die Funktion eines elektronischen Hauptrelais aus. Problematisch hierbei ist jedoch, dass mittels dieser elektronischen Schalter kein Kurzschluss nach Batterie-Plus am Ausgang des Leistungsschalters erkennbar ist. Der Erfindung liegt daher die Aufgabe zugrunde, ein Verfahren zu schaffen, welches es ermöglicht, einen Kurzschluss nach Batterie-Plus am Ausgang des Leistungsschalters auf einfach zu realisierende Weise zu erkennen.

Es ist beispielsweise aus DE 102008040810 A bekannt, die Funktionsfähigkeit eines aus drei Unterbrechungsschaltern bestehenden elektrischen Schützes anhand von Messergebnissen zu diagnostizieren.

### Offenbarung der Erfindung

### Vorteile der Erfindung

Diese Aufgabe wird durch ein Verfahren gemäß den Ansprüchen 1 und 2 sowie durch eine Schaltungsanordnung gemäß dem Anspruch 3 gelöst.

Die Erfindung macht sich die in Fahrzeugen heute üblichen Rückmeldungen zum Steuergerät oder zur Steuereinrichtung des Fahrzeugs der die elektrischen Verbraucher ein- und ausschaltenden elektrischen Schalter zu Nutze und benutzt die Fehlermeldung in Abgleichung mit dem Schaltzustand des elektronischen Leistungsschalters zur Erkennung eines Fehlers aufgrund Kurzschlusses nach Batterie-Plus.

Diese Erkennung eines Fehlers kann auf logischem Wege erfolgen, insoweit kann die Fehlererkennung Teil eines logischen elektronischen Bausteins sein, der wiederum Teil des Steuergeräts sein kann.

Darüber hinaus kann die Logik auch durch ein Computerprogramm realisiert werden, das im Steuergerät der Brennkraftmaschine implementiert ist. Da die Hardware bestehend aus elektronischem Leistungsschalter und einzelnen, die Verbraucher ein- und ausschaltenden Schaltern in Fahrzeugen ohnehin vorhanden ist, kann auf diese Weise eine Nachrüstung des Verfahrens erfolgen, wobei die Nachrüstung auf einfachem Wege durch Einlesen eines Programms stattfindet, das beispielsweise auf einem Computerprogrammprodukt wie einer DVD, einem externen Speicher, einem externen Computer oder dergleichen gespeichert ist.

### Kurze Beschreibung der Zeichnungen

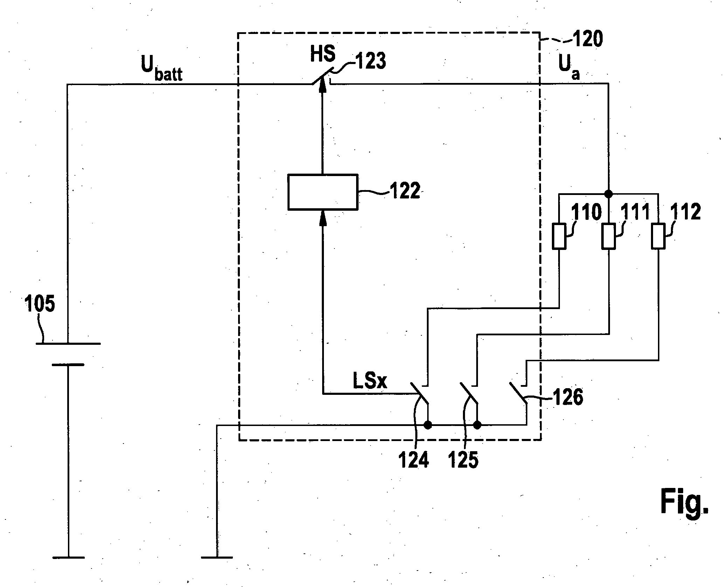

Ein Ausführungsbeispiel der Erfindung ist in der Zeichnung dargestellt und in der nachfolgenden Beschreibung näher erläutert.

### Ausführungsformen der Erfindung

In der **Figur** ist schematisch eine Stromversorgung eines Fahrzeugs in einem Steuergerät 120 dargestellt. Eine Fahrzeugbatterie 105 liefert eine Batteriespannung U_{batt}, die an einem Eingang eines Steuergeräts 120 anliegt. Mittels in dem Steuergerät 120 angeordneten elektronischen Schaltern 124, 125, 126, deren Schaltsignale LSx, wobei x für den betreffenden Schalter steht, also beispielsweise LS124 für den Schalter 124, LS125 für den Schalter 125, LS126 für den Schalter 126, einem Logikbaustein 122 zugeführt werden, werden Verbraucher 110, 111, 112 des Fahrzeugs ein- und ausgeschaltet. Die Verbraucher sind in der Figur als ohmsche Widerstände dargestellt. Durch die Schalter 124, 125, 126 werden die Verbraucher 110, 111, 112 mit der Spannung Uₐ beaufschlagt. Die Spannung Uₐ ist die Ausgangsspannung, die an einem Ausgang des Steuergeräts 120 anliegt. Der Logikbaustein 122 betätigt einen elektronischen Leistungsschalter HS, der in der Figur mit Bezugszeichen 123 bezeichnet ist. Im eingeschalteten Zustand des elektronischen Leistungsschalters HS 123 liegt am Ausgang des Steuergeräts 120 die Spannung Uₐ = U_{batt} an. Durch den elektronischen Leistungsschalter HS 123 können sämtliche Verbraucher von der Batteriespannung U_{batt} getrennt oder mit der Batteriespannung U_{batt} verbunden werden.

Von den Schaltern 124, 125, 126 werden "Fehlermeldungen" in Form der Schaltsignale LSx an den Elektronikbaustein 122 gemeldet. Wenn beispielsweise der elektronische Leistungsschalter HS 123 eingeschaltet ist und die angeschlossenen Verbraucher 110, 111, 112 mit Spannung versorgt sind, findet im Falle einer ordnungsgemäßen Funktion der Schalter 124, 125, 126 keine Fehlermeldung an den Logikbaustein 122 statt. Ist der elektronische Leistungsschalter HS 123 ausgeschaltet und sind damit die Verbraucher spannungslos, melden die Elektronik(leistungs)schalter 124, 125, 126, welche die Verbraucher ein- und ausschalten, in diesem Falle entweder einen Fehler "Kurzschluss" oder "Lastabfall".

Grundidee der Erfindung ist es nun, die Fehlermeldungen der elektronischen Schalter 124, 125, 126 zu benutzen, um einen Kurzschluss nach Batterie-Plus festzustellen. Ein Kurzschluss nach Batterie-Plus, das heißt nach Versorgungsspannung, entspricht im Grunde einer Dauerversorgung "am" elektronischen Leistungsschalter HS 123 "vorbei". Um einen solchen Fehler zu diagnostizieren, wird am Ende eines Fahrzyklus die Versorgungsspannung gezielt abgeschaltet. Das bedeutet, dass der elektronische Leistungsschalter HS 123 durch den Logikbaustein 122 geöffnet wird. In diesem Falle wird eine Fehlermeldung an den Schaltern 124, 125, 126 wegen fehlender Batteriespannung erwartet. Wird jedoch kein Fehler gemeldet, kann daraus geschlossen werden, dass noch eine Versorgungsspannung anliegt, obwohl die Versorgung bereits abgeschaltet ist. Dieser Zustand wird als Fehler "Kurzschluss nach Batterie-Plus" interpretiert und in einem entsprechend benannten Fehlercode im Steuergerät 120 gespeichert und/oder ausgegeben.

Der Logikbaustein 122 kann Teil des Steuergeräts 120 sein und insoweit ein Schaltungsteil des Steuergeräts 120 darstellen. Er kann allerdings auch als Computerprogramm ausgeführt sein, welches im Steuergerät 120 implementiert ist. Das Programm selbst kann auf einem Datenträger gespeichert sein und insoweit auch bei an sich vorhandenen Steuergeräten nachgerüstet werden.

## Patentansprüche

1. Verfahren zur Erkennung eines Kurzschlusses nach Batterie-Plus im Stromkreis eines Kraftfahrzeugs mit einem von einem logischen Baustein (122), der als Schaltungsteil oder implementiertes Computerprogramm einer Steuereinrichtung (120) ausgeführt ist, ansteuerbaren elektronischen Leistungsschalter HS (123) und mit wenigstens einem, vorzugsweise einer Mehrzahl von Verbrauchern (110, 111, 112) ein- und ausschaltenden elektrischen Schaltern LS (124, 125, 126), deren Schaltzustand der Steuereinrichtung (120) gemeldet wird und bei dem auf eine fehlerfreie Funktion dann geschlossen wird, wenn bei eingeschaltetem elektronischem Leistungsschalter HS (123) die angeschlossenen Verbraucher (110, 111, 112) mit Spannung versorgt werden und bei ausgeschaltetem elektroni-. schen Leistungsschalter HS (123) eine Meldung der Schalter LS (124, 125, 126) "Kurzschluss" oder "Lastabfall" in Form von Schaltsignalen LSx (124, 125, 126) erfolgt, wobei am Ende eines Fahrzyklus des Kraftfahrzeugs die Versorgungsspannung gezielt mittels des elektronischen Leistungsschalters HS (123) abgeschaltet wird und der Schaltzustand an jedem die Verbraucher (110, 111, 112) ein- und ausschaltenden elektrischen Schalter LS (124, 125, 126) erfasst wird und auf einen Fehler dann geschlossen wird, wenn an wenigstens einem der elektrischen Schalter LS (124, 125, 126) keine Meldung "Kurzschluss" oder "Lastabfall" erfolgt.

2. Verfahren nach Anspruch 1, **dadurch gekennzeichnet, dass** der Fehler als "Kurzschluss nach Batterie-Plus" klassifiziert und ein entsprechender Fehlercode von der Steuereinrichtung (120) ausgegeben wird.

3. Schaltungsanordnung zur Erkennung eines Kurzschlusses nach Batterie-Plus im Stromkreis eines Kraftfahrzeugs umfassend eine Steuereinrichtung (120), mit einem von der Steuereinrichtung (120) ansteuerbaren Leistungsschalter HS (123), mit wenigstens einem, vorzugsweise einer Mehrzahl von Verbrauchern (110,111,112) ein- und ausschaltenden elektrischen Schaltern LS (124,125,126), mit einem logischen Baustein (122), der mit dem Leistungsschalter HS (123) zu dessen Betätigung und mit den elektrischen Schaltern LS (124,125,126) verbunden ist, sodass Schaltzustände der elektrischen Schalter LS (124,125,126) dem logischen Baustein (122) der Steuereinrichtung (120) gemeldet werden, eine Fahrzeugbatterie, die eine Versorgungsspannung (U_{batt}) an einen Eingang der Steuereinrichtung (120) liefert, wobei der Leistungsschalter HS (123) zwischen der Fahrzeugbatterie und den Verbrauchern (110,111,112) geschaltet ist, um die Verbraucher (110,111,112) von der Versorgungsspannung U_{batt} zu trennen oder mit der Versorgungsspannung U_{batt} zu verbinden, und wobei der logische Baustein (122) der Steuereinrichtung (120), der als Schaltungsteil oder als implementiertes Computerprogramm der Steuereinrichtung (120) ausgeführt ist, das Verfahren nach einem der Ansprüche 1 oder 2 durchführt.

4. Computerprogramm, das alle Schritte eines Verfahrens nach Anspruch 1 oder 2 ausführt, wenn es auf einer Steuereinrichtung (120) einer Brennkraftmaschine abläuft.

5. Computerprogrammprodukt mit Programmcode, der auf einem maschinenlesbaren Träger gespeichert ist, zur Durchführung des Verfahrens nach einem der Ansprüche 1 oder 2, wenn das Programm auf einem Computer oder einer Steuereinrichtung (120) eines Fahrzeugs ausgeführt wird.

## Claims

1. Method for identifying a short circuit to the positive terminal of a battery in an electrical circuit of a motor vehicle having an electronic power switch HS (123) that can be actuated by a logic module (122), which is designed as a circuit part or implemented computer program of a control device (120), and having at least one electrically operated switch, preferably a plurality of electrically operated switches LS (124, 125, 126), that switch(es) on and off loads (110, 111, 112), the switched state of said switches being reported to the control device (120) and it being concluded that the operation is then fault-free when the connected loads (110, 111, 112) are supplied with voltage when the electronic power switch HS (123) is switched on and a "short circuit" or "load drop" message is produced at the switches LS (124, 125, 126) in the form of switching signals LSx (124, 125, 126) when the electronic power switch HS (123) is switched off, wherein at the end of a driving cycle of the motor vehicle the voltage supply is purposefully switched off by means of an electronic power switch HS (123) and the switched state is identified at each electrically operated switch LS (124, 125, 126) that switches on and off the loads (110, 111, 112) and it is then concluded that there is an error when a "short circuit" or "load drop" message is not produced at at least one of the electrically operated switches LS (124, 125, 126).

2. Method according to Claim 1, **characterized in that** the error is classified as a "short circuit to the positive terminal of a battery" and a corresponding error code is broadcast by the control device (120).

3. Circuit arrangement for identifying a short circuit to a positive terminal of a battery in an electrical circuit of a motor vehicle comprising a control device (120) having a power switch HS (123) which can be actuated by the control device (120), having at least one electrically operated switch, preferably a plurality of electrically operated switches LS (124, 125, 126), that switch(es) on and off loads (110, 111, 112), having a logic module (122) which is connected to the power switch HS (123) for the activation thereof and to the electrically operated switches LS (124, 125, 126), with the result that switched states of the electrically operated switches LS (124, 125, 126) are reported to the logic module (122) of the control device (120), a vehicle battery which supplies a supply voltage (U_{batt}) to an input of the control device (120), wherein the power switch HS (123) is connected between the vehicle battery and the loads (110, 111, 112) in order to disconnect the loads (110, 111, 112) from the supply voltage U_{batt} or connect them to the supply voltage U_{batt}, and wherein the logic module (122) of the control device (120), which is designed as a circuit part or implemented computer program of the control device (120), carries out the method according to either of Claims 1 and 2.

4. Computer program that performs all the steps of a method according to Claim 1 or 2, if said computer program is running on a control device (120) in an internal combustion engine.

5. Computer program product having a program code that is stored on a machine-readable carrier for carrying out the method according to any one of Claims 1 or 2 if the program is performed on a computer or on a control device (120) of a vehicle.

## Revendications

1. Procédé de détection d'un court-circuit vers le plus de la batterie dans le circuit électrique d'un véhicule automobile, comprenant un commutateur de puissance HS (123) électronique pouvant être commandé par un composant logique (122), lequel est réalisé sous la forme d'une partie de circuit ou d'un programme informatique mis en oeuvre d'un dispositif de commande (120), et comprenant au moins un, de préférence une pluralité de commutateurs LS (124, 125, 126) électriques pouvant mettre en circuit et hors circuit des consommateurs (110, 111, 112), dont l'état de commutation est signalé au dispositif de commande (120) et avec lequel la conclusion d'un fonctionnement sans défaut est prise lorsque, quand le commutateur de puissance HS (123) électronique est mis en circuit, les consommateurs (110, 111, 112) raccordés sont alimentés en tension et, quand le commutateur de puissance HS (123) électronique est mis hors circuit, il se produit un message des commutateurs LS (124, 125, 126) « court-circuit » ou « baisse de charge » sous la forme de signaux de commutation LSx (124, 125, 126), la tension d'alimentation étant déconnectée de manière ciblée au moyen du commutateur de puissance HS (123) électronique à la fin d'un cycle de déplacement du véhicule automobile et l'état de commutation au niveau de chacun des commutateurs LS (124, 125, 126) électriques qui mettent en circuit et hors circuit les consommateurs (110, 111, 112) étant alors détecté, et la conclusion de la présence d'un défaut est prise quand aucun message « court-circuit » ou « baisse de charge » n'a lieu au niveau d'au moins l'un des commutateurs LS (124, 125, 126) électriques.

2. Procédé selon la revendication 1, **caractérisé en ce que** le défaut est classifié en tant que « court-circuit vers le plus de la batterie » et un code de défaut correspondant est délivré par le dispositif de commande (120).

3. Arrangement de circuit pour la détection d'un court-circuit vers le plus de la batterie dans le circuit électrique d'un véhicule automobile, comprenant un dispositif de commande (120), comprenant un commutateur de puissance HS (123) pouvant être commandé par le dispositif de commande (120), comprenant au moins un, de préférence une pluralité de commutateurs LS (124, 125, 126) électriques qui mettent en circuit et hors circuit des consommateurs (110, 111, 112), comprenant un composant logique (122), lequel est relié au commutateur de puissance HS (123) pour son actionnement et aux commutateurs LS (124, 125, 126) électriques, de sorte que les états de commutation des commutateurs LS (124, 125, 126) électriques sont signalés au composant logique (122) du dispositif de commande (120), une batterie de véhicule qui délivre une tension d'alimentation (U_{batt}) à une entrée du dispositif de commande (120), le commutateur de puissance HS (123) étant commuté entre la batterie de véhicule et les consommateurs (110, 111, 112) afin de déconnecter les consommateurs (110, 111, 112) de la tension d'alimentation (U_{batt}) ou les connecter à la tension d'alimentation (U_{batt}), et le composant logique (122) du dispositif de commande (120), lequel est réalisé sous la forme d'une partie de circuit ou d'un programme informatique mis en oeuvre du dispositif de commande (120), mettant en oeuvre le procédé selon l'une des revendications 1 ou 2.

4. Programme informatique qui met en oeuvre toutes les étapes d'un procédé selon la revendication 1 ou 2 lorsqu'il est exécuté sur un dispositif de commande (120) d'un moteur à combustion interne.

5. Produit de programme informatique comprenant un code de programme qui est enregistré sur un support lisible par machine, en vue de mettre en oeuvre le procédé selon l'une des revendications 1 ou 2 lorsque le programme est exécuté sur un ordinateur ou un dispositif de commande (120) d'un véhicule.
